# EUROPÄISCHE PATENTANMELDUNG

(11) **EP 0 905 841 A2**
(43) Veröffentlichungstag der Anmeldung: **31.03.1999**
(21) Anmeldenummer: 98114711.9
(22) Anmeldetag: 05.08.1998
(51) Int. Cl.: H02B 1/56, H05K 7/20

(54) **Schaltschrank zur Aufnahme elektrischer und elektronischer Aggregate**

(30) Priorität: 24.09.1997 DE 19741993
(71) Anmelder: Burn, Heinz, 4655 Stüsslingen (CH)
(72) Erfinder: Die Erfindernennung liegt noch nicht vor
(74) Vertreter: Dr. Weitzel & Partner

(57) **Zusammenfassung**

Bei einer Pendelschale zum Befestigen von Vorhängen, Lamellenvorhängen, Lamellen u. dgl. an einer Haltestange od. dgl. mit einer die Haltestange zumindest teilweise umschließenden Haltevorrichtung, an der mindestens eine Halteplatte angeordnet ist, an der über Befestigungsmittel das aufzuhängende Element befestigbar ist, schlägt die Erfindung vor, daß die Haltevorrichtung,die beweglich zueinander ausgebildete, die Haltestange umgreifende Halteelemente aufweist zugunsten eines Öffnens der Haltevorrichtung bei der Montage bzw. Demontage der Pendelschale.

## Beschreibung

Die Erfindung betrifft eine Pendelschale gemäß dem Oberbegriff des Hauptanspruches.

Pendelschalen sind bereits aus der Praxis bekannt und dienen dazu, Vorhänge bzw. Lamellen, die neben- oder aneinandergesetzt einen Vorhand ergeben od. dgl. an einer Halterung zu befestigen, die z. B. aus einer an der Decke angeordneten Haltestange bestehen kann. Derartige Pendelschalen werden z. B. für sogenannte Schweißerschutzvorhänge verwendet, um einen Schweißerarbeitsplatz von dem übrigen Raum abzutrennen.

Die aus der Praxis bekannten Pendelschalen weisen im wesentlichen eine Haltevorrichtung für die Haltestange auf, wobei diese Haltevorrichtung im wesentlichen hülsenförmig ausgebildet ist und auf die Haltestange aufgeschoben werden kann. An der Haltevorrichtung ist mindestens eine Halteplatte angeordnet, an der dann der Vorhang, die Lamelle od. dgl. befestigt werden kann, so daß das aufzuhängende Element aufgehängt wird, wobei jedoch eine Beweglichkeit z. B. der aufgehängten Lamelle dadurch erreicht wird, daß die Pendelschale auf der Haltestange drehbar ausgebildet ist. Dadurch wird ermöglicht, daß sich die derart aufgehängten Lamellen bewegen und beiseite geschoben werden können, wenn eine Person durch den Lamellenvorhang geht.

Bei diesen bekannten Pendelschalen hat sich als nachteilig herausgestellt, daß die Montage aufwendig ist, da die Pendelschalen stets vom Ende der Haltestange auf die Haltestange aufgeschoben werden müssen. Insbesondere bei längeren Haltestangen ergibt sich ein zusätzliches Problem, da die Haltestangen über weitere Haltevorrichtungen z. B. mit der Decke eines Raumes verbunden sind und dadurch ein Aufschieben von Pendelschalen auf die Haltestange verhindert wird, d. h. vor der Montage einer Haltestange ist stets darauf zu achten, daß die erforderlichen Pendelschalen auf die Haltestange geschoben werden, bevor die Haltestange selbst z. B. an der Decke befestigt wird.

Der Erfindung liegt die Aufgabe zugrunde, eine Pendelschale zu schaffen, die eine besonders leichte Montage derselben an ihrer Halterung ermöglicht.

Diese der Erfindung zugrundeliegende Aufgabe wird durch die Lehre des kennzeichnenden Teiles des Hauptanspruches gelöst.

Mit anderen Worten ausgedrückt wird eine Pendelschale vorgeschlagen, deren Haltevorrichtung nicht geschlossen, sondern öffenbar ausgebildet ist, so daß selbst bei bereits fertig montierter Haltestange oder auch sonstiger Haltevorrichtung eine nachträgliche Montage der Pendelschalen ohne weiteres möglich ist.

Vorteilhafte Ausgestaltungen der Erfindung sind in den Unteransprüchen erläutert.

Ein Ausführungsbeispiel der Erfindung wird nachfolgend in der Zeichnung dargestellt, wobei
- Fig. 1: eine Pendelschale in aufgeklappter Stellung darstellt,
- Fig. 2: zeigt im Schnitt die Pendelschale in geschlossener Position und
- Fig. 3: zeigt ein weiteres Ausführungsbeispiel einer Pendelschale.

Bezugnehmend auf die Figuren ist eine Pendelschale 1 dargestellt, die im wesentlichen aus einer Haltevorrichtung 2 besteht, an der Halteplatten 3a angeordnet sind, die die zu haltende Lamelle 4 bzw. den zu haltenden Vorhang od. dgl. tragen.

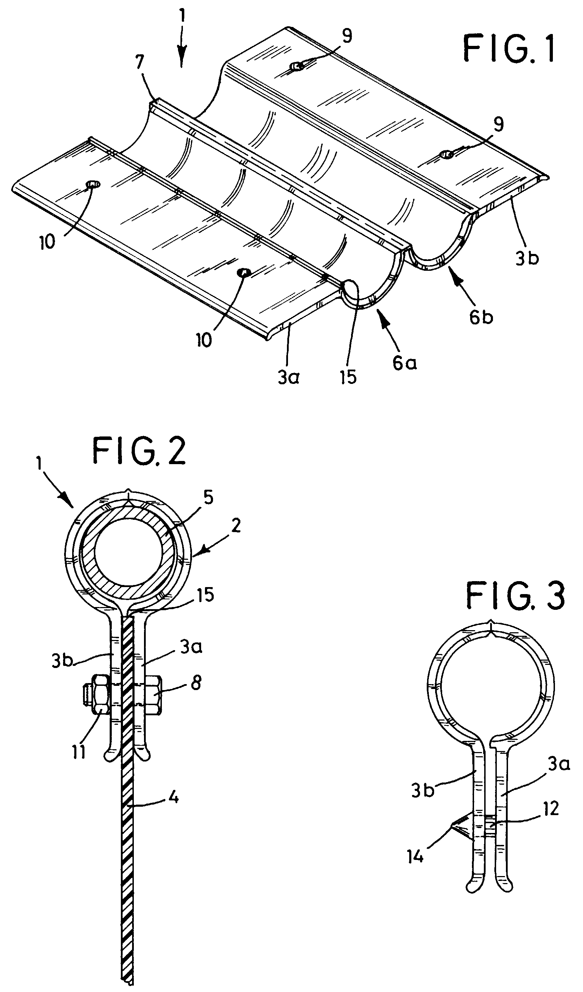

Die Haltevorrichtung 2, mit der die Pendelschale 1 an einer Haltestange 5 gemäß Fig. 2 angeordnet werden kann, ist in diesem Ausführungsbeispiel aus zwei Halbschalen 6a, 6b, die über ein Gelenk 7 schwenkbar miteinander verbunden sind.

Am gelenkfernen Ende einer jeden Halbschale 6a und 6b ist anschließend eine entsprechende Halteplatte 3a, 3b angeordnet, wobei es jedoch auch möglich ist, lediglich eine Halteplatte 3 zu verwenden.

Im geschlossenen Zustand ist die Pendelschale in Fig. 2 dargestellt, woraus ersichtlich wird, daß die Haltevorrichtung 2 die Haltestange 5 umschließt und wobei die Lamelle 4 von den Halteplatten 3a und 3b gehalten wird. Die Lamelle 4 wird durch Befestigungsmittel gehalten, beispielsweise durch eine Schraube 8, die durch entsprechende Bohrungen in den Halteplatten 3a, 3b durchgeführt wird und z. B. mittels einer Kontermutter 11 gehalten wird.

Es ist auch möglich, an einer Halteplatte unmittelbar ein Befestigungsmittel anzubringen, das einteilig mit der Halteplatte ausgebildet ist, wie beispielsweise das Ausführungsbeispiel gemäß Fig. 3 zeigt, wobei ein Haltebolzen 12 an der Halteplatte 3a angeordnet ist und an seinem plattenfernen Ende eine Spitze 14 aufweist, die sich in Richtung der Platte allmählich verbreitert. Im weiteren Verlauf zur Halteplatte verjüngt sich schlagartig der Haltebolzen 12, so daß sich eine widerhakenähnliche Ausbildung ergibt. Diese Ausführung hat den Vorteil, daß ein zusätzliches Fixieren der Lamelle 4 bzw. des Vorhanges od. dgl. durch weitere Befestigungsmittel nicht erforderlich ist, sondern daß nach dem Schließen der Pendelschale 1 in ihrer Gebrauchsposition lediglich die Halteplatten 3a und 3b zusammengepreßt werden müssen, so daß der Haltebolzen 12 durch eine entsprechend gegenüber angeordnete Bohrung in der Halteplatte 3b hindurchgestoßen wird und anschließend ein unbeabsichtigtes Öffnen der Halteplatten und der Pendelschale 1 insgesamt durch die widerhakenähnliche Ausbildung des Haltebolzens 12 verhindert wird.

Anstatt zweier gelenkig miteinander verbundenen Halbschalen 6a, 6b kann eine entsprechende Pendelschale z. B. auch aus zwei oder mehr nicht miteinander verbundenen Einzelelementen bestehen, wobei es sich jedoch herausgestellt hat, daß die vorgeschlagene Pendelschale 1 besonders vorteilhaft für eine schnelle und dauerhafte Montage von Lamellenvorhängen u. dgl. geeignet ist Darüber hinaus bietet die vorgeschlagene Pendelschale Vorteile bei der Herstellung derselben, insbesondere wenn die Pendelschale aus Kunststoff gespritzt wird und die vorgeschlagene Pendelschale ist in ihrer geöffneten, in Fig. 1 dargestellten Position einfach und platzsparend zu transportieren.

## Patentansprüche

1. Pendelschale zum Befestigen von Vorhängen, Lamellenvorhängen, Lamellen u. dgl. an einer Haltestange od. dgl. mit einer die Haltestange zumindest teilweise umschliessenden Haltevorrichtung, an der mindestens eine Halteplatte angeordnet ist, an der über Befestigungsmittel das aufzuhängende Element befestigbar ist, gekennzeichnet durch die Haltevorrichtung (2), die beweglich zueinander ausgebildete, die Haltestange (5) umgreifende Halteelemente aufweist zugunsten eines Öffnens der Haltevorrichtung (2) bei der Montage bzw. Demontage der Pendelschale (1).

2. Pendelschale gemäß Anspruch 1, gekennzeichnet durch die gelenkig miteinander verbundenen Halteelemente.

3. Pendelschale gemäß Anspruch 1, gekennzeichnet druch die Halteelemente, die lösbar miteinander verbunden sind.

4. Pendelschale gemäß einem der vorhergehenden Ansprüche, gekennzeichnet durch die Haltevorrichtung (2), die in Form einer Hülse ausgebildet ist.

5. Pendelschale gemäß einem der vorhergehenden Ansprüche, gekennzeichnet durch zwei Halteplatten (3a, 3b), die einander gegenüberliegend ausgebildet sind zugunsten einer Aufnahme des aufzuhängenden Elementes zwischen den Halteplatten (3a, 3b).

6. Pendelschale gemäß Anspruch 5, gekennzeichnet durch die Halteplatten (3a, 3b), die jeweils an dem unteren Ende eines halbschalenförmigen Halteelementes angeordnet sind.

7. Pendelschale gemäß einem der vorhergehenden Ansprüche, gekennzeichnet durch mindestens einen Haltebolzen (12), der auf einer Halteplatte (3a, 3b) angeordnet ist und in Richtung des aufzuhängenden Elementes ausgerichtet ist.

8. Pendelschale gemäß Anspruch 7, gekennzeichnet durch den Haltebolzen (12), dessen vordere Endung spitz ausgebildet ist und in seinem vorderen Bereich einen Widerhaken aufweist.

9. Pendelschale gemäß Anspruch 7 oder 8, gekennzeichnet durch eine Öffnung (9) in der dem Haltebolzen gegenüberliegenden Halteplatte (3b).

10. Pendelschale gemäß einem der vorhergehenden Ansprüche, gekennzeichnet durch die aus Kunststoff bestehende Pendelschale (1).

11. Pendelschale gemäß einem der vorhergehenden Ansprüche, gekennzeichnet durch die Haltevorrichtung (2), die aus zwei über ein Gelenk (7) verbundene Halbschalen (6a, 6b) besteht.
